Europäisches Patentamt

European Patent Office

Office européen des brevets

(11) Publication number: **0 380 702**
**A1**

# EUROPEAN PATENT APPLICATION
## published in accordance with Art. 158(3) EPC

(21) Application number: 89908883.5

(22) Date of filing: 28.07.89

(86) International application number:
PCT/JP89/00777

(87) International publication number:
WO 90/01827 (22.02.90 90/05)

(51) Int. Cl.5: **H02M 3/28**

(30) Priority: 30.07.88 JP 189655/88

(43) Date of publication of application:
08.08.90 Bulletin 90/32

(84) Designated Contracting States:
**DE FR GB**

(71) Applicant: **FANUC LTD**
**3580, Shibokusa Aza-Komanba Oshino-mura**
**Minamitsuru-gun Yamanashi 401-05(JP)**

(72) Inventor: **NAKAMURA, Shigeo 7-305, F.**
**Mansion**
**Harimomi 3539-1, Shibokusa Oshino-mura,**
**Minamitsuru-gun Yamanashi 401-05(JP)**

(74) Representative: **Brunner, Michael John et al**
**GILL JENNINGS & EVERY 53-64 Chancery**
**Lane**
**London WC2A 1HN(GB)**

(54) SWITCHING REGULATOR.

(57) A simplified circuit constitution of a switching regulator with a plurality of output circuits having dissimilar output voltages. Unlike the prior art, the saw-tooth signal oscillator is no more provided for the switching regulator that has a plurality of output circuits. Namely, the switching regulator comprises a first switching regulator (SR) and a DC-DC converter (DD) that receives in a branched manner the output voltage $(V_1)$ of the first switching regulator (SR), wherein provision is made of saw-tooth wave signal generating means (TWG) for generating saw-tooth wave signals (TW) in response to the secondary voltage of the transformer (T) such as a differentiation circuit (DIF) or an integration circuit (INT) for differentiating or integrating the secondary voltage of the transformer (T), comparator means (COMP) which receives the saw-tooth wave signals (TW) and a deviation signal ($\delta$) produced by the deviation signal output means (DA) and produces an output signal depending upon a relationship of magnitude between the saw-tooth wave signal (TW) and the deviation signal ($\delta$), conduction means $(Q_2)$ which is connected to a circuit that receives the output voltage $(V_1)$ of the first switching regulator (SR) in a branched manner and which is controlled in response to the output signal of the comparator means (COMP), or an inductance $(L_2)$ which is connected to the circuit that receives the output voltage $(V_1)$ of the first switching regulator (SR) in a branched manner and which is turned on or off by conduction means $(Q_5)$ that is controlled in response to the output signal of the comparator means (COMP), a reverse-current preventing diode $(D_3)$ connected to the inductance $(L_2)$, and a capacitor $(C_2)$ connected to the reverse-current preventing diode $(D_3)$.

Fig. 3

SPECIFICATION

TITLE OF THE INVENTION

SWITCHING POWER SUPPLY

FIELD OF THE INVENTION

This invention relates to an improvement applicable to a switching power supply. More specifically, this invention relates to an improvement for simplifying the circuit construction of a switching power supply having plural sets of output circuits each of which has an output voltage different from one another.

BACKGROUND OF THE INVENTION

A switching power supply is defined as a DC power supply which is a combination of a DC chopper circuit, a transformer which is intermittently supplied with electric power by the DC chopper circuit, and a capacitor which is charged a pulsatile electric current intermittently flowing in the transformer. The DC power supply is allowed to output a stable DC electric power of which the voltage is different from that of the original DC power supply, regardless of variation in the voltage of the original DC power supply and/or regardless of variation in the load thereof. In the case where the foregoing switching power supply is required to have plural output circuits each of which outputs a voltage different from one another, a combination of a switching power supply (a basic switching power supply) and one or more DC-DC converters is employed. In other words, the output circuit of the basic switching power supply is split into plural circuits, each of which is provided a DC-DC converter for the purpose to allow such each circuit to output a voltage different from one another.

Referring to a drawing, an example of the switching power supply having plural output circuits and which is available in the prior art will be described below.

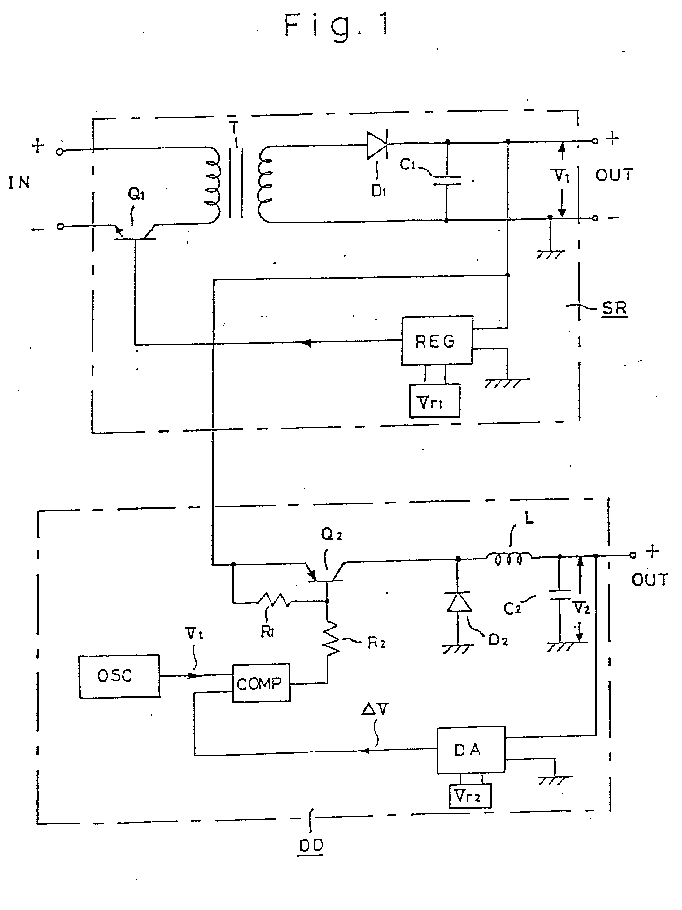

Referring to Fig. 1, an emblem SR indicates a basic switching power supply (which is a combination of ingredients surrounded by a chain line), and an emblem DD indicates a DC-DC converter (which is a combination of ingredients surrounded by another chain line).

The basic switching power supply SR is a combination of a transformer T, a transistor $Q_1$ which intermittently supplies electric current to the transformer T, and a regulator REG which regulates the transistor $Q_1$ with a duty ratio DR (not shown) for the purpose to decrease a difference, if any, between the output voltage $V_1$ of the basic switching power supply SR and a first reference voltage $V_{r1}$ and to maintain the output voltage $V_1$ of the basic switching power supply SR at a fixed value. The transformer T is supplied a pulsatile electric current with a duty ratio DR (not shown) regulated by the regulator REG, and the secondary current thereof charges a capacitor $C_1$ with a second duty ratio (1-DR) which is determined in response to the first duty ratio DR. The capacitor $C_1$ outputs a desirable value of DC voltage $V_1$. An emblem $D_1$ is

a diode for preventing an electric current from flowing in a reverse direction. Replacement of the capacitor $C_1$ with a voltage smoother circuit containing an inductance (not shown) is generally more effective to smooth the output voltage of the switching power supply SR. In this case, a flywheel diode is generally required, although no description is given to a flywheel diode here, just for the simplicity's sake.

On the other hand, the DC-DC converter DD (which is, as described above, a combination of ingredients surrounded by a chain line) is provided a transistor $Q_2$ which turns on and off a voltage which is split from the output voltage $V_1$ of the basic switching power supply SR to enable the DC-DC converter DD to output a voltage $V_2$ which is different from the output voltage $V_1$ of the foregoing basic switching power supply SR. In other words, emblems DA indicates a deviation signal generator means which actually is a differential amplifier etc. and which generates a deviation voltage signal $\Delta V$ representing a difference, if any, between the output voltage $V_2$ of the DC-DC converter DD and a second reference voltage $Vr_2$. The deviation voltage signal $\Delta V$ output by the deviation signal generator means DA which actually is a differential amplifier etc. and a serrated wave voltage signal $V_t$ generated by an oscillator OSC are input into a comparator etc. COMP which actually is an inversion type operational amplifier etc.

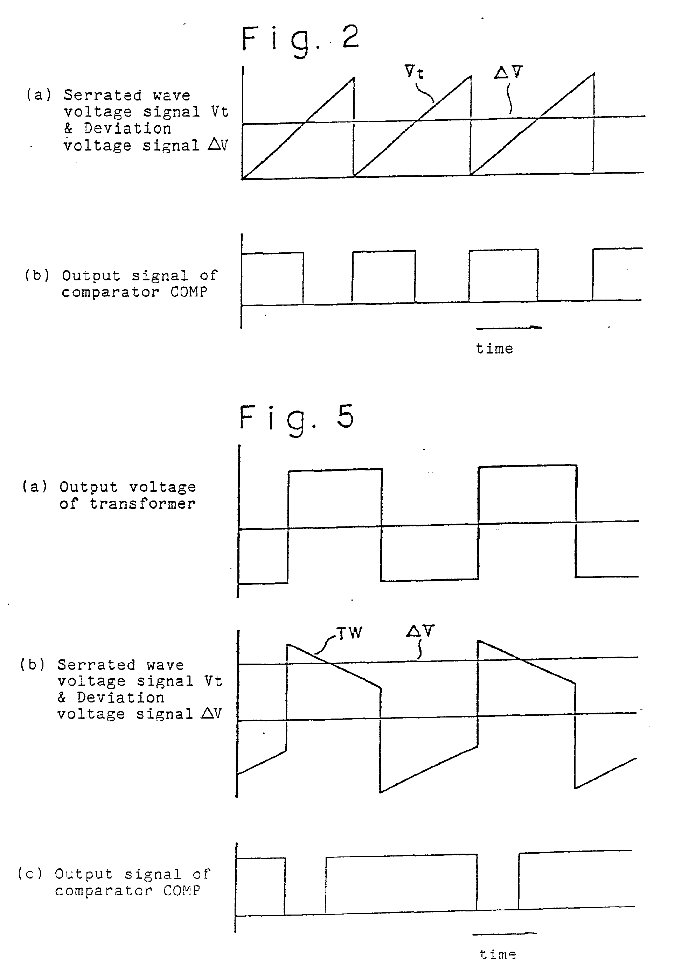

Referring to Figs. 2 (a) and 2 (b) illustrating a set of time charts, the serrated wave voltage signal $V_t$ is sliced by the deviation voltage signal $\Delta V$ which is output by the foregoing deviation signal generator means DA which actually is a differential amplifier etc. As is illustrated in Fig. 2 (b), the comparator etc. COMP which actually is an inversion type operational amplifier etc. generates output signals exclusively during the period in which the serrated wave voltage signal $V_t$ exceeds the deviation voltage signal $\Delta V$ output by the foregoing deviation signal generator means DA which actually is a differential amplifier etc. In this example, exclusively during the period, the comparator etc. COMP outputs an output signal or a low level (approximately zero V) signal.

The DC-DC converter DD is provided a PNP transistor $Q_2$ of which the emitter and the base are connected with each other through a resistor $R_1$. Therefore, the PNP transistor $Q_2$ is normally in an off position. However, since the base of the PNP transistor $Q_2$ is connected with the comparator etc. COMP which actually is an inversion type operational amplifier etc. through a resistor $R_2$, the PNP transistor $Q_2$ is turned on exclusively during the period in which the serrated wave voltage signal $V_t$ exceeds the deviation voltage signal $\Delta V$ and the comparator etc. COMP which actually is an inversion type operational amplifier etc. outputs a signal (In this example, a low level signal). In this example, the period is a period in which a low level signal (approximately zero V) illustrated in Fig.

2 (b) is output. Therefore, a higher value of the deviation voltage signal $\Delta V$ corresponds to a less value of the duty ratio, and a less value of the deviation voltage signal $\Delta V$ corresponds to a larger value of the duty ratio. As a result, the output voltage $V_2$ of the DC-DC converter DD is regulated to be maintained identical to the second reference voltage $V_{r2}$. An emblem $D_2$ indicates a flywheel diode and a combination of an inductance L and a capacitor $C_2$ is an LC type smoothing circuit.

The DC-DC converter contained in the foregoing switching power supply having plural output circuits and which is available in the prior art, is provided an oscillator for generating serrated wave voltage signals. However, if a switching power supply which does not need such an oscillator should be developed, it would be a big advantage from the industrial viewpoints.

OBJECTS AND SUMMARY OF THE INVENTION

A first object of this invention is to provide a switching power supply having plural output circuits and having a simplified circuit structure.

A second object of this invention is to provide a switching power supply having plural output circuits or being a combination of a basic switching power supply and one or more DC-DC converters, wherein the circuit construction is simplified and a voltage higher than the output voltage of the basic switching power supply is allowed to be output.

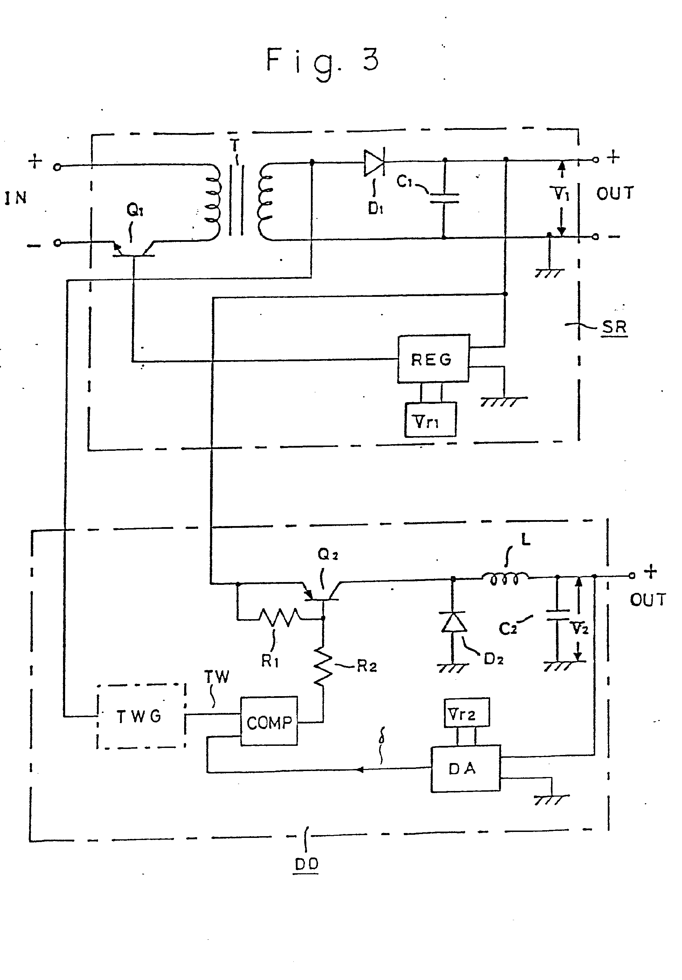

To achieve the first object of this invention, a first switching power supply in accordance with this invention (corresponding to claim 1) is, as is illustrated in Fig. 3, a basic switching power supply (SR) and a DC-DC converter (DD) of which the input terminal is connected to the output terminal of the foregoing basic switching power supply (SR), wherein the DC-DC converter (DD) is provided a deviation signal generator means (DA) for generating a deviation signal ($\delta$) representing the difference between the output voltage ($V_2$) of the DC-DC converter (DD) and a second reference voltage ($V_{r2}$), a serrated wave signal generator means (TWG) for generating a serrated wave signal (TW) in response to the secondary voltage of a transformer (T) contained in the basic switching power supply (SR), a comparator means (COMP) for generating an output signal depending on the quantitative relations between the serrated wave signal (TW) and the deviation signal ($\delta$), and a switching means ($Q_2$) which is connected to the output terminal of the basic switching power supply (SR) and which intermittently switches on and off the circuit thereof in response to the output signal of the comparator (COMP).

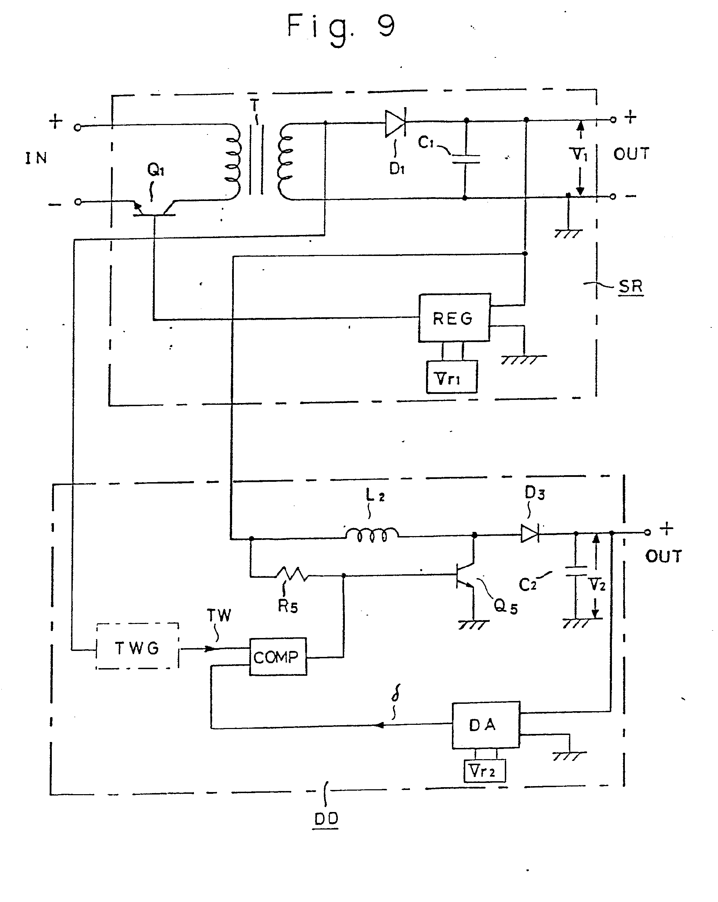

To achieve the second object of this invention, a second switching power supply in accordance with this invention (corresponding to claim 2) is, as is illustrated in Fig. 9, a basic switching power supply (SR) and a DC-DC converter (DD) of which the input terminal is connected to the output terminal of the foregoing basic switching power supply (SR), wherein the DC-DC converter (DD) is provided a deviation signal output means (DA) for outputting a deviation signal ($\delta$) representing the difference between the output voltage ($V_2$) of the DC-DC converter (DD) and a second reference voltage ($V_{r2}$), a serrated wave signal generator means (TWG) for generating a serrated wave signal (TW) in response to the secondary voltage of a transformer (T) contained in the basic switching power supply (SR), a comparator means (COMP) for generating an output signal depending on the quantitative relations between the serrated wave signal (TW) and the deviation signal ($\delta$), an inductance ($L_2$) of which the one end is connected to the output terminal of the basic switching power supply (SR) and the other end is connected to a point whose voltage is less than at least the output voltage ($V_1$) of the foregoing basic switching power supply (SR) through a switching means ($Q_5$) which intermittently switches on and off in response to the output signal of the comparator (COMP), a diode ($D_3$) of which the positive terminal is connected to the foregoing other end of the foregoing inductance ($L_2$) for preventing an reverse current from flowing, a capacitor ($C_2$) which is connected to the negative terminal of the diode ($D_3$), and an output terminal which is connected to the foregoing negative terminal of the foregoing diode ($D_3$).

In either of the foregoing first and second switching power supplies in accordance with this invention, the serrated wave signal generator means (TWG) can be a differentiating circuit (DIF) which differentiates the secondary voltage of the transformer (T), or an integrating circuit (INT) which integrates the secondary voltage of the transformer (T) (Each of these two embodiments respectively corresponds to Claim 3 or Claim 4).

The polarity of the output signal of the foregoing comparator (COMP) for regulating the switching means $(Q_2)$ can be selected following the quantitative relations between the serrated wave signal (TW) and the deviation signal $(\delta)$.

Since the transformer (T) included in the basic switching power supply (SR) generates a secondary voltage of rectangular waves, differentiation or integration of the secondary voltage of the transformer (T) readily generates serrated wave signals. This invention was finished by reducing this concept to practice. In reality, a combination of a CR circuit or an LR circuit and some other simple circuits including one or more transistors produces a DC-DC converter which functions similarly to the DC-DC converter which is accompanied by an oscillator and which is available in the prior art.

BRIEF DESCRIPTION OF THE DRAWINGS

Fig. 1 is a schematic drawing of a switching power supply available in the prior art,

Fig. 2 is a set of time charts of a switching power supply available in the prior art,

Fig. 3 is a schematic drawing of a switching power supply in accordance with this invention,

Fig. 4 is a schematic drawing of a switching power supply in accordance with the first embodiment of this invention,

Fig. 5 is a set of time charts of a switching power supply in accordance with the first embodiment of this invention,

Fig. 6 is a schematic drawing of a serrated wave signal generator means which is an ingredient of a switching power supply in accordance with a modification of the first embodiment of this invention,

Fig. 7 is a schematic drawing of a serrated wave signal generator means which is an ingredient of a switching power supply in accordance with another modification of the first embodiment of this invention,

Fig. 8 is a schematic drawing of a switching power supply in accordance with the second embodiment of this invention, and

Fig. 9 is a schematic drawing of a switching power supply in accordance with the third embodiment of this invention.

DETAILED DESCRIPTION OF PREFERRED EMBODIMENT

Referring to drawings, three independent switching power supplys in accordance with three embodiments of this invention will be described below.

FIRST EMBODIMENT

The first embodiment is a switching power supply provided a differentiating circuit consisting of a CR circuit or the like which acts as a serrated wave signal generator means TWG and a differential amplifier or the like which acts as a deviation signal generator means DA.

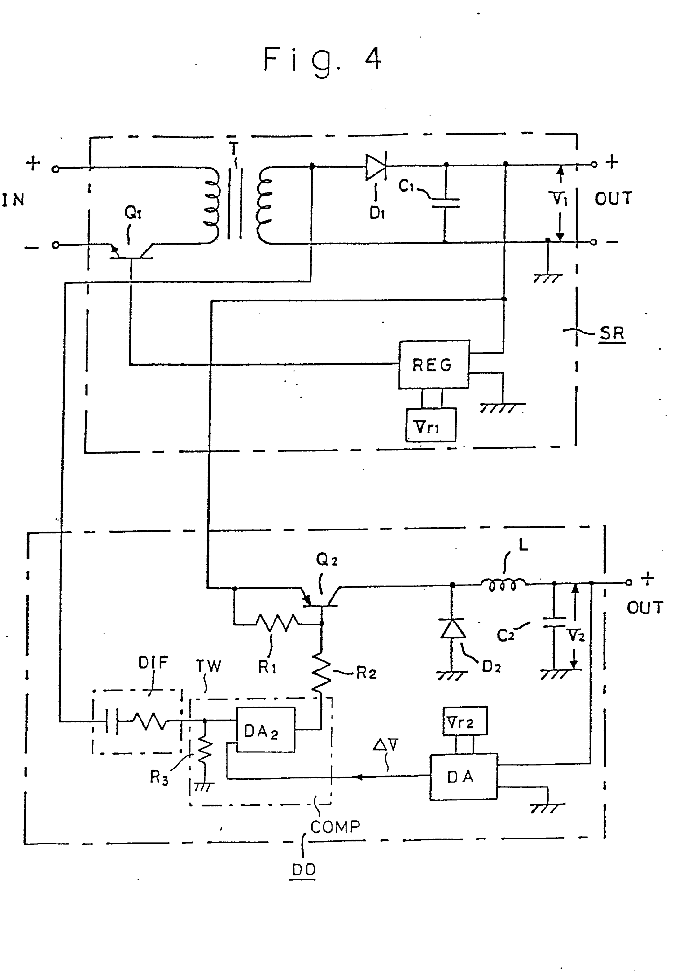

Referring to Fig. 4 which is a schematic drawing of a switching power supply in accordance with the first embodiment of this invention, an emblem SR representing a circuit surrounded by a chain line indicates a basic switching power supply, and an emblem DD representing a circuit surrounded by another chain line indicates a DC-DC converter.

The basic switching power supply SR consists of a transformer T, a transistor $Q_1$ which intermittently supplies electric current to the transformer T and a regulator REG which regulates the transistor $Q_1$ with a duty ratio DR (not shown) which is effective to decrease a difference, if any, between the output voltage $V_1$ of the basic switching power supply SR and a first reference voltage $Vr_1$ for the ultimate purpose to maintain the output voltage $V_1$ of the basic switching power supply SR at a predetermined value. As a result, being intermittently applied DC voltage with a duty ratio DR (not shown) regulated by the regulator REG, the transformer T is caused to intermittently flow an electric current in the secondary circuit thereof with another duty ratio (1-DR) which is determined by the foregoing duty ratio DR. This secondary current charges a capacitor $C_1$, which outputs a required DC voltage $V_1$

towards a load. The function of a diode $D_1$ is to prohibit a reverse current from flowing.

On the other hand, a DC-DC converter DD is provided a transistor $Q_2$ which turns on and off the electric current flowing therethrough for the purpose to convert the input voltage $V_1$ which is the output voltage of the basic switching power supply SR, to an output voltage $V_2$ which is different from the output voltage $V_1$ of the basic switching power supply SR. The output voltage $V_2$ of the DC-DC converter DD is applied to a deviation signal generator means DA which actually is a differential amplifier or the like to be compared with a second reference voltage $V_{r2}$ for the purpose to generate a deviation voltage signal $\Delta V$. An emblem DIF represents a differentiating circuit which actually is a CR circuit and which acts as a serrated wave signal generator means TWG which is the subject matter of this invention. A comparator COMP compares the serrated wave signal TW generated by the serrated wave signal generator means TWG consisting of a differentiating circuit DIF and the deviation voltage signal $\Delta V$.

In this embodiment, the deviation voltage signal $\Delta V$ is a voltage signal and the serrated wave signal TW generated by the differenciating circuit DIF is a current signal. This is the reason why a comparator COMP is provided a means for converting a current signal to a voltage signal, such means being able to be for example a grounded load resistor $R_3$ etc., as is illustrated in the drawing.

The comparator COMP is further provided a differential amplifier etc. $DA_2$ which compares the serrated wave voltage signal TW which is a voltage drop produced in the grounded load resistor $R_3$ and a deviation voltage signal $\Delta V$ generated by the deviation signal generator means DA and keeps outputting an output signal exclusively during a period in which the serrated wave voltage signal TW exceeds the deviation voltage signal $\Delta V$.

The emitter of the PNP transistor $Q_2$ is connected with the output terminal of the basic switching power supply SR, and the base of the PNP transistor $Q_2$ is connected with the output terminal of the comparator or the like COMP through a resistor $R_2$. Further, a resistor $R_1$ connects the emitter and the base of the PNP transistor $Q_2$. A voltage smoother circuit consisting of an inductance L and a capacitor $C_2$ is effective to convert the rectangular wave of the intermittent DC voltage generated by turning on and off the output voltage of the basic switching power supply SR, to a smooth DC voltage. An emblem $D_2$ represents a flywheel diode.

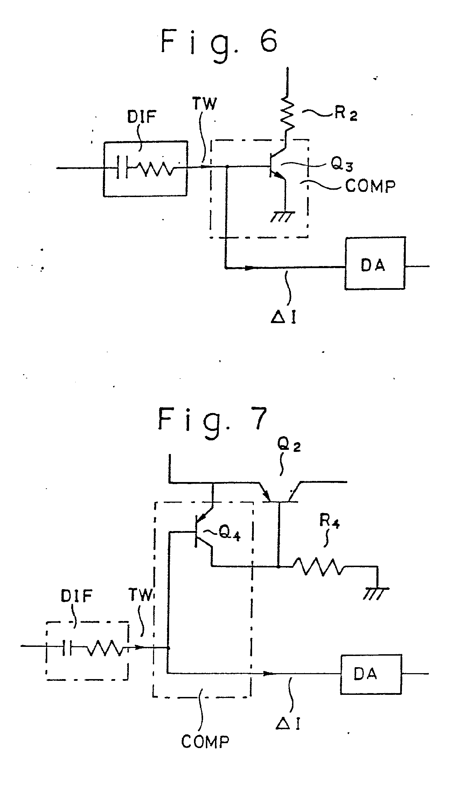

Referring to Figs. 5 (a), 5 (b) and 5 (c), the function of the DC-DC converter DD will be described below, particularly focusing on the subject matter of this invention.

Referring to Fig. 5 (a), a rectangular wave voltage is generated in the secondary winding of the transformer T. This rectangular wave voltage is applied to the serrated wave signal generator means TWG which actually is the differentiating circuit DIF.

Referring to Fig. 5 (b), a serrated wave voltage signal TW which is generated by converting the serrated wave current signal generated by the differentiating circuit etc. DIF into a voltage signal by employing, in this example, the resistor $R_3$, is sliced by the deviation voltage signal $\Delta V$.

Referring to Fig. 5 (c), the comparator COMP outputs a signal exclusively during a period in which the serrated wave voltage signal TW exceeds the deviation voltage signal $\Delta V$ to the base of the PNP transistor $Q_2$, through the resistor $R_2$.

During a period in which the signal is not applied, the PNP transistor $Q_2$ stays in an OFF position, because the emitter and the base thereof are kept in the same potential. Once the signal is input, however, the base voltage of the PNP transistor $Q_2$ drops to turn on the transistor $Q_2$ and to allow the DC-DC converter DD to flow a current, resultantly allowing the DC-DC converter DD to output an output voltage $V_2$. In addition, the duty ratio is regulated, depending on the deviation voltage signal $\Delta V$. In other words, a larger value of the deviation voltage signal $\Delta V$ causes a less value of the duty ratio (a shorter ON period) and a less value of the deviation voltage signal $\Delta V$ causes a larger value of the duty ratio (a longer ON period), resultantly maintaining the output voltage $V_2$ of

the DC-DC converter DD to be identical to the second reference voltage $V_{r2}$.

In the foregoing embodiment, the serrated wave current signal TW generated by the serrated wave signal generator means TWG which actually is a differentiating circuit DIF is converted to a current signal, before being compared with the deviation voltage signal $\Delta V$ generated by the deviation signal generator means DA. A modification is available, however, in which a deviation signal generator means DA generates a negative current signal ($- \Delta I$) which is to be applied to a comparator COMP comprising an NPN transistor $Q_3$ connected as is illustrated in Fig. 6, resultantly realizing the same operation as was described above by causing the NPN transistor $Q_3$ to turn on exclusively during a period in which the serrated wave current signal TW is larger than the deviation current signal $\Delta I$.

Further, another modification is available in which a comparator COMP is provided a PNP transistor $Q_4$ accompanied by a resistor $R_4$ connected thereto as is illustrated in Fig. 7 and a deviation signal generator means DA is caused to output a negative current signal ($- \Delta I$), resultantly realizing the same operation as was described above by causing the PNP transistor $Q_4$ to turn off resultantly for turning on the PNP transistor $Q_2$.

SECOND EMBODIMENT

The second embodiment is a switiching power supply provided an integrating circuit which acts as a serrated wave signal generator means TWG and a differential amplifier etc. which acts as a deviation signal generator means DA.

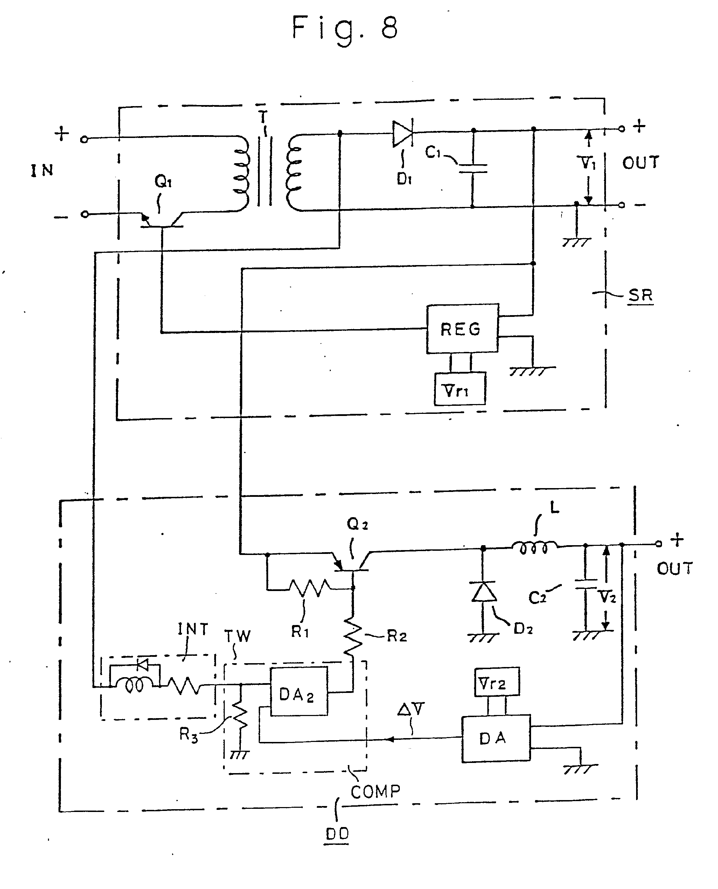

Referring to Fig. 8 which is a schematic drawing of a switching power supply in accordance with the second embodiment of this invention, an emblem SR representing a circuit surrounded by a chain line indicates a basic switching power supply, and an emblem DD representing a circuit surrounded by another chain line indicates a DC-DC converter.

The basic switching power supply SR consists of a transformer T, a transistor $Q_1$ which intermittently supplies electric current to the transformer T and a regulator REG which regulates the transistor $Q_1$ with a duty ratio DR (not shown) which is effective to decrease the difference between the output voltage $V_1$ of the basic switching power supply SR and a first reference voltage $V_{r1}$ for the ultimate purpose to maintain the output voltage $V_1$ of the basic switching power supply SR at a predetermined value. As a result, being intermittently applied DC voltage with a duty ratio DR (not shown) regulated by the regulator REG, the transformer T is caused to intermittently flow an electric current in the secondary circuit thereof with another duty ratio (1-DR) which is determined by the foregoing duty ratio DR. This secondary current charges a capacitor $C_1$, which outputs a required DC voltage $V_1$ towards a load. The function of a diode $D_1$ is to prohibit a counter current from flowing.

On the other hand, a DC-DC converter DD is provided a transistor $Q_2$ which turns on and off the electric current flowing therethrough for the purpose to convert the input voltage $V_1$ which is the output voltage of the basic switching power supply SR, to an output voltage $V_2$ which is different from the output voltage of the basic switching power supply SR. The output voltage $V_2$ of the DC-DC converter DD is applied to a deviation signal generator means DA which actually is a differential amplifier or the like. The deviation signal generator means DA outputs a deviation voltage signal $\Delta V$ which is a difference between the output voltage $V_2$ of the DC-DC converter DD and a second reference voltage $V_{r2}$. An emblem INT represents an integrating circuit which actually is an LR circuit and which acts as a serrated wave signal generator means TWG which is the subject matter of this invention. The function of a diode connected in parallel with an inductance L is to consume the energy which has been storaged in the inductance L or to convert the energy into heat as soon as possible after the integrating action finishes. A comparator COMP compares the serrated wave signal TW generated by the serrated wave signal generator means TWG consisting of an integrating circuit INT and the deviation voltage signal $\Delta V$.

Also in this embodiment, the deviation voltage signal $\Delta V$ is a voltage signal and the serrated wave signal TW generated by the differencial circuit DIF is a current signal. This is the reason why a comparator COMP is provided a means for converting a current signal to a voltage signal, such means being able to be for example a grounded load resistor $R_3$ etc., as is illustrated in the drawing. The comparator COMP is further provided a differential amplifier etc. $DA_2$ which compares the serrated wave voltage signal TW which is a voltage drop produced in the grounded load resistor $R_3$ and a deviation voltage signal $\Delta V$ generated by the deviation signal generator means DA and keeps outputting an output signal exclusively during a period in which the serrated wave voltage signal TW exceeds the deviation voltage signal $\Delta V$.

The emitter of the PNP transistor $Q_2$ is connected with the output terminal of the basic switching power supply SR, and the base of the PNP transistor $Q_2$ is connected with the output terminal of the comparator or the like COMP through a resistor $R_2$. Further, a resistor $R_1$ connects the emitter and the base of the PNP transistor $Q_2'$. A voltage smoother circuit consisting of an inductance L and a capacitor $C_2$ is effective to convert the rectangular wave of the intermittent DC voltage generated by turning on and off the output voltage of the basic switching power supply SR, to a smooth DC voltage. An emblem $D_2$ represents a flywheel diode.

THIRD EMBODIMENT

The third embodiment is a switching power supply, in which the DC-DC converter DD is caused to output an

output voltage $V_2$ higher than the output voltage $V_1$ of the basic switching power supply SR, and either a differentiating circuit DIF or integrating circuit INT is allowed to be employed as a serrated wave signal generator means TWG thereof.

Referring to Fig. 9, which is a schematic drawing of a switching power supply in accordance with the third embodiment of this invention, the difference between the switching power supply in accordance with this invention and the switching power supply illustrated in Fig. 3 is tabulated below.

1. The input terminal of a diode $D_3$ for preventing a reverse current from flowing is connected to the output terminal of the basic switching power supply SR through an inductance $L_2$, and the output terminal of the diode $D_3$ is connected with a capacitor $C_2$ of which the other terminal is grounded.

2. A resistor $R_5$ connects the input terminal of the inductance $L_2$ and the output terminal of the comparator means COMP and the base of an NPN transistor $Q_5$ of which the collector is connected to the point where the output terminal of the inductance $L_2$ and the input terminal of the diode $D_3$ are connected and of which the emitter is grounded.

The circuit of the comparator means COMP is turned off in response to the signal thereof, and the output circuit of the comparator means COMP remains in an On position, while the comparator means COMP outputs no signal. Therefore, while the comparator means COMP outputs no signal, an electric current flows from the basic switching power supply SR into the comparator means COMP through the resistor $R_5$, resultantly turning off the NPN transistor $Q_5$. Once the comparator means COMP outputs a signal, however, the electric current flows from the basic switching power supply SR into the base of the NPN transistor $Q_5$ through the resistor $R_5$, resultantly turning on the NPN transistor $Q_5$.

In response to the turning-on action of the NPN transistor $Q_5$ which action was caused by an operation of the comparator means COMP, the output voltage $V_1$ of the basic switching power supply SR is applied across the inductance $L_2$, in which an amount of magnetic energy is storaged therein.

In response to the turning-off action of the NPN transistor $Q_5$ which action was caused by a cease of the operation of the comparator means COMP, the magnetic energy storaged in the inductance $L_2$ moves into the capacitor $C_2$ in the form of electric current through the diode $D_3$ to be stored in the capacitor $C_2$ in the form of electric energy. Since the polarity of the voltage which appears across the inductance $L_2$ during the period in which the NPN transistor is off, is reversed by the turning-on action of the NPN transistor $Q_5$, the voltage of the capacitor $C_2$ turns out to be a sum of the output voltage $V_1$ of the basic switching power supply SR and the voltage appearing across the inductance $L_2$, resultantly allowing the output voltage $V_2$ to be higher than the output voltage $V_1$ of the basic switching power supply SR. The remainder of the function is quite similar to that which was described, referring to Fig. 3.

The foregoing description has clarified that this invention successfully provided a switching power supply which has plural output circuits but has no oscillator which acts as a serrated wave signal generator means, although an oscillator was essential for a switching power supply which has plural output circuits and which is available in the prior art. as a result, the circuit construction of a switching power supply in accordance with this invention is remarkably simplified.

Although this invention has been described with reference to three specific embodiments, this is not meant to be construed in a limiting sense. Various other embodiments and/or modifications of this invention will become apparent to persons skilled in the art upon reference to the description of this invention. It is therefore contemplated that the claims will cover any such embodiments and/or modifications as fall within the true scope of this invention.

## CLAIMS

1. A switching power supply comprising a basic switching power supply (SR) and a DC-DC converter (DD) of which the input terminal is connected to the output terminal of said basic switching power supply (SR), wherein :

said DC-DC converter (DD) comprising:

a deviation signal generator means (DA) for generating a deviation signal ($\delta$) representing the difference between the output voltage ($V_2$) of said DC-DC converter (DD) and a reference voltage ($V_{r2}$),

a serrated wave signal generator means (TWG) for generating a serrated wave signal (TW) in response to the secondary voltage of a transformer (T) contained in said basic switching power supply (SR),

a comparator means (COMP) for generating an output signal depending on the quantitative relations between said serrated wave signal (TW) and said deviation signal ($\delta$), and

a switching means ($Q_2$) which is connected to the output terminal of said basic switching power supply (SR) and which intermittently switches on and off the circuit thereof in response to the output signal of said comparator (COMP).

2. A switching power supply comprising a basic switching power supply (SR) and a DC-DC converter (DD) of which the input terminal is connected to the output terminal of said basic switching power supply (SR), wherein :

said DC-DC converter (DD) comprising:

a deviation signal generator means (DA) for generating a deviation signal ($\delta$) representing the difference between the output voltage ($V_2$) of said DC-DC converter (DD) and a reference voltage ($Vr_2$),

a serrated wave signal generator means (TWG) for generating a serrated wave signal (TW) in response to the secondary voltage of a transformer (T) contained in said basic switching power supply (SR),

a comparator means (COMP) for generating an output signal depending on the quantitative relations between said serrated wave signal (TW) and said deviation signal ($\delta$),

an inductance ($L_2$) of which the one end is connected to the output terminal of said basic switching power supply (SR) and the other end is connected to a point whose voltage is less than at least the output voltage ($V_1$) of said basic switching power supply (SR) through a switching means ($Q_5$) which intermittently switches on and off in response to the output signal of said comparator (COMP),

a diode ($D_3$) of which the positive terminal is connected to said other end of said inductance ($L_2$) for preventing a reverse current from flowing,

a capacitor ($C_2$) connected to the negative terminal of said diode ($D_3$), and

an output terminal connected to said negative terminal of said diode ($D_3$).

3. A switching power supply in accordance with claim 1 wherein:

said serrated wave signal generator means (TWG) is a differentiating circuit (DIF).

4. A switching power supply in accordance with claim 1 wherein:

said serrated wave signal generator means (TWG) is an integrating circuit (INT).

# Fig. 1

# Fig. 2

(a) Serrated wave voltage signal Vt & Deviation voltage signal $\triangle V$

(b) Output signal of comparator COMP

time

# Fig. 5

(a) Output voltage of transformer

(b) Serrated wave voltage signal Vt & Deviation voltage signal $\triangle V$

(c) Output signal of comparator COMP

time

# Fig. 3

# Fig. 4

# Fig. 6

# Fig. 7

# Fig. 8

# Fig. 9

# INTERNATIONAL SEARCH REPORT

International Application No  PCT/JP89/00777

## I. CLASSIFICATION OF SUBJECT MATTER (if several classification symbols apply, indicate all) 6

According to International Patent Classification (IPC) or to both National Classification and IPC

Int. Cl$^4$    H02M3/28

## II. FIELDS SEARCHED

| Minimum Documentation Searched 7 | |
|---|---|
| Classification System | Classification Symbols |
| IPC | H02M3/28 |

| Documentation Searched other than Minimum Documentation to the Extent that such Documents are Included in the Fields Searched 8 | |
|---|---|
| Jitsuyo Shinan Koho | 1974 — 1988 |
| Kokai Jitsuyo Shinan Koho | 1974 — 1988 |

## III. DOCUMENTS CONSIDERED TO BE RELEVANT 9

| Category * | Citation of Document, 11 with indication, where appropriate, of the relevant passages 12 | Relevant to Claim No. 13 |
|---|---|---|
| X | JP, A, 61-35164 (Miyakawa Seisakusho Kabushiki Kaisha) 19 February 1986 (19. 02. 86) (Family : none) | 1 — 4 |

* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| September 12, 1989 (12. 09. 89) | October 2, 1989 (02. 10. 89) |
| International Searching Authority | Signature of Authorized Officer |
| Japanese Patent Office | |

Form PCT/ISA/210 (second sheet) (January 1985)